# EUROPEAN PATENT SPECIFICATION

(11) **EP 3 439 343 B1**
(45) Date of publication and mention of the grant of the patent: **17.02.2021**
(21) Application number: 17773203.9
(22) Date of filing: 28.03.2017
(51) Int. Cl.: H04W 48/10, H04W 8/26

(54) **PROCESSING IDENTIFICATION INFORMATION OF PARTICIPATING SERVICE PROVIDERS (PSPS)**
VERARBEITUNG VON IDENTIFIZIERUNGSINFORMATIONEN VON PSPS
TRAITEMENT D'INFORMATIONS D'IDENTIFICATION DES PSPS

(30) Priority: 29.03.2016 CN 201610188788
(43) Date of publication of application: 06.02.2019
(73) Proprietor: Baicells Technologies Co. Ltd., Beijing 100085 (CN)
(72) Inventor: ZHOU, Mingyu, Beijing 100085 (CN)
(74) Representative: EP&C
(86) International application number: PCT/CN2017/078400
(87) International publication number: WO 2017/167173

(56) References cited:
- EP-A1- 1 670 275
- EP-A1- 2 071 891
- CN-A- 102 474 814
- CN-A- 102 726 098
- CN-A- 104 244 194
- US-A1- 2014 334 372

## Description

### TECHNICAL FIELD

The present disclosure relates to the field of wireless communication technology, in particular to a method and a device for processing identification information, a base station and a User Equipment (UE).

### BACKGROUND

Mobile communication system is a system for transmitting to UEs (e.g., mobile phones) communication services by an operator through the deployment of radio access network devices (e.g., base stations) and core network devices (e.g., Home Location Register (HLR)).

Currently, the mobile communication system has been developed from the first generation (1G) to the fourth generation (4G). The 1G mobile communication system refers to an initial analogue cellular phone standard where merely voice communication services are provided, and mainly an analogue technique and a Frequency Division Multiple Access (FDMA) access method are used. A digital technique is introduced into the 2G mobile communication system, so as to improve the network capacity, the voice quality and the security, represented by Global System for Mobile Communication (GSM) and Code Division Multiple Access (CDMA) Interim Standard (IS)-95. The 3G mobile communication system mainly refers to CDMA2000, Wireless CDMA (WCDMA), Time Division-Synchronization CDMA (TD-SCDMA), where the CDMA is used as an access technique. For the 4G mobile communication system, a relatively uniform standard is adopted, i.e., Long Term Evolution/Long Term Evolution-Advanced (LTE/LTE-A) formulated by 3^{rd}-Generation Partnership Project (3GPP). For the LTE/LTE-A system, its downlink transmission is performed on the basis of an Orthogonal Frequency Division Multiple Access (OFDMA) technique, and its uplink transmission is performed on the basis of a Single Carrier-Frequency Division Multiple Access (SC-FDMA) technique. Due to a flexible bandwidth and a self-adaptive modulation encoding mode, it is able to achieve highspeed transmission at a downlink peak rate of 1Gbps and an uplink peak rate of 500Mbps.

MulteFire (MF) is an LTE technique which has newly defined an uplink transmission method on the basis of an LTE Release 13 (R13) Licensed Assistant Access (LAA) downlink transmission method and which may be operated at a non-licensed frequency band individually, i.e., stand-alone LTE-U. The MF technique may support two access network modes or two kinds of network services, i.e., a Public Land Mobile Network (PLMN) access mode and a Neutral Host Network (NHN) access mode.

For the NHN access mode, different service providers are indicated through broadcasting Participating Service Provider Identity (ID) (PSP-ID) in a System Information Block MF1 (SystemInformationBlockTypeMF1, SIBMF1 for short), and an MF network in the NHN mode may support a plurality of PSP-IDs, so as to enable a plurality of service providers to share the MF network to provide the services. Due to a size of the SIB, the number of the broadcast PSP-IDs (e.g., short-format PSP-IDs) is limited. When more PSP-IDs are supported by the MF network in the NHN mode, it is impossible for the MF network to broadcast all the PSP-IDs. At this time, it is necessary to indicate the PSP-IDs that have not been broadcast via an indicator of the SIBMF1. When the UE fails to find the corresponding PSP-ID in the SIB and the UE is aware of the fact that there are the PSP-IDs that have not been broadcast, the base station may notify the PSP-IDs that have not been broadcast to the UE in accordance with a query request in a unicast manner. When the PSP-IDs to which a plurality of UEs wants to access are not broadcast via the SIB, the base station needs to inquire the PSP-IDs that have not been broadcast, and transmit the inquired PSP-IDs that have not been broadcast to the UEs. Hence, a large number of downlink resources will be occupied.

Chinese patent application publication CN102474814A discloses that relating a current location to one or more entries in an MMSS Location Associated Priority List (MLPLs) enables scaling a range of entries in the PLMN list, indicating whether the MSPL apply to the entire list of PLMNs stored in an access terminal or to some subset of the PLMN List.

Chinese patent application publication CN102726098A discloses that if a PLMN list of a system information module SIB 1 which is to be broadcasted by the base station does not include the PLMN ID of the primary operator of the base station, then the PLMN ID of the primary operator of the base station should be added to the SIB 1, and then the SIB 1 is broadcasted.

European patent application publication EP2071891A1 discloses a computer-implemented method of selecting a network operator in a mobile device being configured for consuming a plurality of services.

### SUMMARY

An object of the present disclosure is to provide a method and a device for processing identification information, a base station and a UE, as defined in the accompanying claims, so as to prevent the occurrence of an excessive resource overhead caused when a small number of PSP-IDs are broadcast and the UE needs to inquire the PSP-IDs that have not been broadcast.

In one aspect, the present disclosure provides in some embodiments a method for processing identification information for use in a UE, including steps of: acquiring at least one subset of IDs from a base station, the subset of IDs being a subset of a set of all PSP-IDs supported by a current access network; determining information about Participating Service Providers (PSPs) supported by the base station to which the UE currently belongs in accordance with the acquired at least one subset of IDs; and selecting a PSP to be accessed in accordance with the information about the PSPs.

In a possible embodiment of the present disclosure, the step of determining the information about the PSPs supported by the base station to which the UE currently belongs in accordance with the acquired at least one subset of IDs includes determining an union of the acquired at least one subset of IDs as the information about the PSPs.

In a possible embodiment of the present disclosure, the step of acquiring the at least one subset of IDs from the base station includes acquiring SIBs carrying the subsets of IDs from different base stations belonging to a same access network, different subsets of IDs being mapped to different SIBs.

In a possible embodiment of the present disclosure, the step of acquiring the at least one subset of IDs from the base station includes acquiring the at least one subset of IDs transmitted by the base station through an idle channel resource.

In a possible embodiment of the present disclosure, the step of acquiring the at least one subset of IDs transmitted by the base station through the idle channel resource includes receiving the SIBs carrying the subsets of IDs from the base station to which the UE currently belongs through different idle subcarriers, different subsets of IDs being mapped to different SIBs, and different SIBs being transmitted through different idle subcarriers.

In a possible embodiment of the present disclosure, the step of acquiring the at least one subset of IDs transmitted by the base station through the idle channel resource includes receiving the SIBs carrying the subsets of IDs from the base station to which the UE currently belongs within different idle subframes, different subsets of IDs being mapped to different SIBs, and different SIBs being transmitted within different idle subcarriers.

In a possible embodiment of the present disclosure, the step of selecting the PSP to be accessed in accordance with the information about the PSPs includes: determining whether or not there is the PSP to which the UE is to be accessed in accordance with the information about the PSPs; and if there is no PSP to which the UE is to be accessed and the SIBs indicate that there is the identification information that has not been broadcast, requesting the base station to which the UE currently belongs to inquire the corresponding PSP, so as to access to the corresponding PSP.

In a possible embodiment of the present disclosure, the step of selecting the PSP to be accessed in accordance with the information about the PSPs includes: determining whether or not there is the PSP to which the UE is to be accessed in accordance with the information about the PSPs; and when there is no PSP to which the UE is to be accessed and the number of the currently-acquired SIBs is smaller than the total number of the SIBs, requesting the base station to which the UE currently belongs to inquire the corresponding PSP, so as to access to the corresponding PSP.

In a possible embodiment of the present disclosure, each subset of IDs includes one or more PSP-IDs.

In another aspect, the present disclosure provides in some embodiments a method for processing identification information for use in a base station, including steps of: acquiring a set of all PSP-IDs supported by a current access network; dividing the set of PSP-IDs into a plurality of subsets of IDs; and transmitting at least one of the plurality of subset of IDs to UEs within a coverage range of the base station.

In a possible embodiment of the present disclosure, the step of transmitting the at least one of the plurality of subset of IDs to the UEs within the coverage range of the base station includes transmitting the at least one of the plurality of subset of IDs to the UEs within the coverage range of the base station through an idle channel resource.

In a possible embodiment of the present disclosure, the step of transmitting the at least one of the plurality of subset of IDs to the UEs within the coverage range of the base station through the idle channel resource includes: mapping the at least one of the plurality of subset of IDs to a corresponding System Information Block (SIB) by the correspondence of one subset of IDs to one SIB, different subsets of IDs being mapped to different SIBs; and transmitting the SIB carrying the corresponding subset of IDs to the UEs within the coverage range of the base station through the idle channel resource.

In a possible embodiment of the present disclosure, the step of transmitting the SIB carrying the corresponding subset of IDs to the UEs within the coverage range of the base station through the idle channel resource includes: determining idle subcarriers that have not been occupied; and mapping the SIB carrying the corresponding subset of IDs to a corresponding idle subcarrier by the correspondence of one SIB to one idle subcarrier, and transmitting the SIB to the UEs within the coverage range of the base station, different SIBs being transmitted through different idle subcarriers.

In a possible embodiment of the present disclosure, the step of transmitting the SIB carrying the corresponding subset of IDs to the UEs within the coverage range of the base station through the idle channel resource includes: determining idle subframes that have not been occupied; and mapping the SIB carrying the corresponding subset of IDs to a corresponding idle subframe by the correspondence of one SIB to one idle subcarrier, and transmitting the SIB to the UEs within the coverage range of the base station, different SIBs being transmitted within different idle subframes.

In a possible embodiment of the present disclosure, each SIB further carries information about the total number of SIBs.

In a possible embodiment of the present disclosure, each subset of IDs includes one or more PSP-IDs.

In yet another aspect, the present disclosure provides in some embodiments a device for processing identification information for use in a UE, including: an acquisition module configured to acquire at least one subset of IDs from a base station, the subset of IDs being a subset of a set of all PSP-IDs supported by a current access network; a determination module configured to determine information about PSPs supported by the base station to which the UE currently belongs in accordance with the acquired at least one subset of IDs; and a processing module configured to select a PSP to be accessed in accordance with the information about the PSPs.

In still yet another aspect, the present disclosure provides in some embodiments a device for processing identification information for use in a base station, including: an acquisition module configured to acquire a set of all PSP-IDs supported by a current access network; a division module configured to divide the set of IDs into a plurality of subsets of IDs; and a transmission module configured to transmit at least one of the plurality of subset of IDs to UEs within a coverage range of the base station.

In still yet another aspect, the present disclosure provides in some embodiments a UE, including: a receiver configured to acquire at least one subset of IDs from a base station, the subset of IDs being a subset of a set of all PSP-IDs supported by a current access network; and a processor connected to the receiver and configured to determine information about PSPs supported by the base station to which the UE currently belongs in accordance with the acquired at least one subset of IDs, and select a PSP to be accessed in accordance with the information about the PSPs.

In still yet another aspect, the present disclosure provides in some embodiments a base station, including: a processor configured to acquire a set of all PSP-IDs supported by a current access network and divide the set of IDs into a plurality of subsets of IDs; and a transmitter connected to the processor and configured to transmit at least one of the plurality of subset of IDs to UEs within a coverage range of the base station.

According to the embodiments of the present disclosure, the set of all the PSP-IDs is divided into the plurality of subsets of IDS, and one or more subsets of IDs is provided to the UE, so that the UE may receive the PSP-IDs as more as possible. As a result, it is able to prevent the occurrence of an excessive resource overhead caused when a small number of PSP-IDs are broadcast and the UE needs to inquire the PSP-IDs that have not been broadcast.

### BRIEF DESCRIPTION OF THE DRAWINGS

Fig.1 is a flow chart of a method for processing identification information according to one embodiment of the present disclosure;
Fig.2 is another flow chart of the method according to one embodiment of the present disclosure;
Fig.3 is yet another flow chart of the method according to one embodiment of the present disclosure;
Fig.4 is a block diagram of a device for processing identification information according to one embodiment of the present disclosure;
Fig.5 is a block diagram of a base station according to one embodiment of the present disclosure;
Fig.6 is a flow chart of a method for processing identification information according to one embodiment of the present disclosure;
Fig.7 is another flow chart of the method according to one embodiment of the present disclosure;
Fig.8 is yet another flow chart of the method according to one embodiment of the present disclosure;
Fig.9 is a block diagram of a device for processing identification information according to one embodiment of the present disclosure;
Fig.10 is a block diagram of a UE according to one embodiment of the present disclosure; and
Fig.11 is a flow chart of a method for processing identification information according to one embodiment of the present disclosure.

### DETAILED DESCRIPTION OF THE EMBODIMENTS

In order to make the objects, the technical solutions and the advantages of the present disclosure more apparent, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

In the embodiments of the present disclosure, UE may be called as terminal, mobile station (MS) or mobile terminal, e.g., a mobile phone (cellular phone), a computer with a mobile terminal, a portable mobile device, a pocket-sized mobile device, a handheld mobile device, or a mobile device built in a computer.

In the related art, when a large number of PSP-IDs are supported by an MF network in an NHN mode, it is impossible to broadcast all the PSP-IDs, and at this time, it is necessary to indicate the PSP-IDs that have not been broadcast in an indicator of an SIB. When the UE fails to find the corresponding PSP-ID in the SIB and the UE is aware of the fact that there are the PSP-IDs that have not been broadcast, the UE may inquire a base station for the PSP-IDs that have not been broadcast, and the base station may notify the PSP-IDs that have not been broadcast to the UE in accordance with a query request in a unicast manner. When the PSP-IDs to which a plurality of UEs wants to access are not broadcast via the SIB, the base station needs to inquire the PSP-IDs that have not been broadcast, and transmit the inquired PSP-IDs that have not been broadcast to the UEs. Hence, a large number of downlink resources will be occupied. An object of the present disclosure is to provide a method and a device for processing identification information, a base station and a UE, so as to divide a set of all PSP-IDs into a plurality of subsets of IDs and provide one or more subsets of IDs to the UE, thereby to enable the UE to receive the PSP-IDs as more as possible, reduce the number of query operations initiated by the UE, and prevent the occurrence of unnecessary resource overhead.

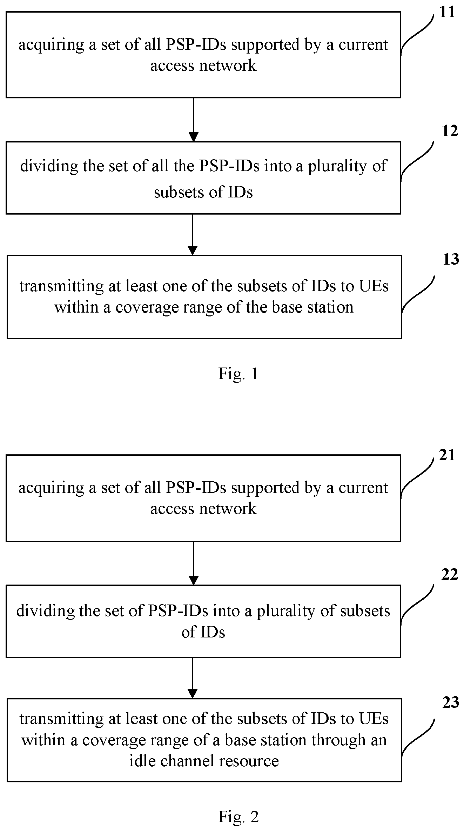

As shown in Fig.1, the present disclosure provides in some embodiments a method for processing identification information which includes the following steps.

Step 11: acquiring a set of all PSP-IDs supported by a current access network.

The current access network refers to an NHN access network, and a PSP refers to a service provider, e.g., an operator or any other type of service provider. Different PSPs have different PSP-IDs, i.e., different identification information. All the PSP-IDs supported by the NHN access network to which a base station is currently accessed form the set of PSP-IDs.

Step 12: dividing the set of all the PSP-IDs into a plurality of subsets of IDs.

The set of PSP-IDs may be divided into the plurality of subsets of IDs using a predetermined algorithm. The number of the subsets of IDs and the number of the PSP-IDs in each subset may be determined in accordance with the algorithm. The number of the PSP-IDs in different subsets may be same or different. The predetermined algorithm will not be particularly defined in the embodiments of the present disclosure. The set of PSP-IDs may be divided into Num subsets, the PSP-IDs in different subsets may not overlap each other, and a union of the Num subsets may approach to the set of PSP-IDs as possible, where Num is an integer greater than 1. Also, the set of PSP-IDs may be randomly divided into a plurality of subsets, and the PSP-IDs in the subsets may overlap each other. Of course, any other division modes may also be applied. It should be appreciated that, the PSP-IDs in the subsets, i.e., combinations of the PSP-IDs in a PSP-ID list, will not be particularly defined in the embodiments of the present disclosure.

Step 13: transmitting at least one of the subsets of IDs to UEs within a coverage range of the base station.

The base station may transmit at least one subset of IDs, e.g., two or more subsets of IDs, to the UEs within the coverage range of the base station. In this way, each UE may receive the PSP-IDs as more as possible, so as to reduce the number of query operations initiated by the UE and reduce the resource overhead, thereby to prevent the occurrence of an excessive resource overhead caused when a small number of PSP-IDs are broadcast and the UE needs to inquire the PSP-IDs that have not been broadcast.

As shown in Fig.2, the present disclosure provides in some embodiments a method for processing identification information, which includes: Step 21 of acquiring a set of all PSP-IDs supported by a current access network; Step 22 of dividing the set of PSP-IDs into a plurality of subsets of IDs; and Step 23 of transmitting at least one of the subsets of IDs to UEs within a coverage range of a base station through an idle channel resource.

Here, the so-called idle channel resource at least includes an idle time-domain resource, an idle frequency-domain resource or any other idle channel resource. It should be appreciated that, for the entire access network architecture, a plurality of base stations may be located at different regions of a same network, and different subsets of IDs may be broadcast by different base stations, i.e., the subsets of IDs may be transmitted from the base station to the UE in a Space Division Duplexing (PDD) manner. In addition, each base station itself may broadcast different subsets of IDs in accordance with the current idle time-domain or frequency-domain resource, i.e., the subsets of the IDs may be transmitted from the base station to the UE in a Time Division Duplexing (TDD) or Frequency Division Duplexing (FDD) manner. For an individual base station, it may broadcast different subsets of IDs in accordance with the current idle time-domain or frequency-domain resource, i.e., the subsets of IDs may be transmitted from the base station to the UE in a TDD or FDD manner.

In the embodiments of the present disclosure, the individual base station may transmit the plurality of subsets of IDs to the UE through the idle channel resource, so as to increase the number of the broadcast PSP-IDs and reduce the query operations initiated by the UE, thereby to prevent the occurrence of unnecessary channel overhead.

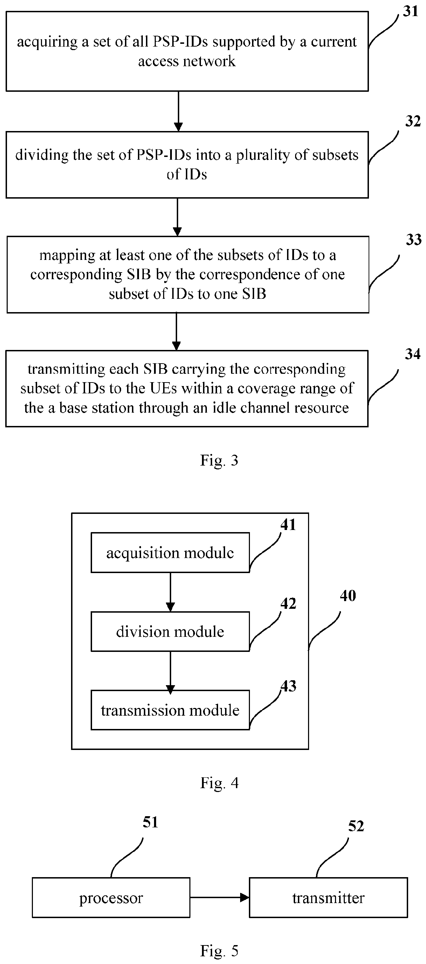

As shown in Fig.3, the present disclosure provides in some embodiments a method for processing identification information, which includes: Step 31 of acquiring a set of all PSP-IDs supported by a current access network; Step 32 of dividing the set of PSP-IDs into a plurality of subsets of IDs; Step 33 of mapping at least one of the subsets of IDs to a corresponding SIB by correspondence of one subset of IDs to one SIB; and Step 34 of transmitting each SIB carrying the corresponding subset of IDs to the UEs within a coverage range of the a base station through an idle channel resource.

In Step 33, different subsets of IDs may be mapped to different SIBs. In other words, when one subset of IDs needs to be broadcast, it may be mapped to one SIB. When two subsets of IDs need to be broadcast, they may be mapped to different SIBs respectively. In this way, the plurality of subsets of IDs may be carried in the plurality of SIBs. It should be appreciated that, different SIBs carrying different subsets of IDs may carry the other system information same as or different from each other. Further, the different SIBs may be of a same type or different types.

The idle channel resource includes an idle time-domain resource and an idle frequency-domain resource. Each SIB carrying the corresponding subset of IDs may be transmitted to the UE through the idle time-domain resource, or the idle frequency-domain resource or the combination thereof. Application scenarios where each subset of IDs is transmitted through each of the idle frequency-domain resource and idle time-domain resource will be described hereinafter.

### First Example

Step 34 may include: determining idle subcarriers that have not been occupied; and mapping each SIB carrying the corresponding subset of IDs to a corresponding idle subcarrier by the correspondence of one SIB to one idle subcarrier, and transmitting each SIB to the UEs within the coverage range of the base station, different SIBs being transmitted through different idle subcarriers.

When the transmission on a plurality of carriers is supported by the base station (evolved NodeB (eNB)), the base station may transmit the SIBs (e.g., evolved SIBs (eSIBs), i.e., SIBMF1) on N carriers acquired after successful channel competition, and the SIBs carry different subsets of IDs, i.e., different short-format PSP-ID lists. Each short-format PSP-ID list at most includes M short-format PSP-IDs. When L (L≤N) idle carriers have been monitored by the eNB, the UE may receive L SIBs broadcast by the eNB on the L idle carriers. The short-format PSP-IDs received on the L carriers may form a set of short-format PSP-IDs supported by the current access network (having a same network ID, i.e., NHN-ID), where L, M and N are each an integer greater than or equal to 1.

### Second Example

Step 34 may include: determining idle subframes that have not been occupied; and mapping each SIB carrying the corresponding subset of IDs to a corresponding idle subframe by the correspondence of one SIB to one idle subcarrier, and transmitting each SIB to the UEs within the coverage range of the base station, different SIBs being transmitted within different idle subframes.

The same eNB may transmit the SIBs carrying different subsets of IDs, i.e., different short-format PSP-ID lists, to the UEs within different idle subframes, i.e., different time points at which the SIBs are transmitted. For example, when the eSIBs are transmitted by the eNB at a period of 40ms and the set of PSP-IDs is divided to two subsets of IDs, a subset 1 of IDs, i.e., a short-format PSP-ID list 1, may be transmitted within an n^{th} period, a subset 2 of IDs, i.e., a short-format PSP-ID list 2, may be transmitted within an (n+1)^{th} period, the subset 1 of IDs, i.e., a short-format PSP-ID list 1, may be transmitted within an (n+2)^{th} period, and the subset 2 of IDs, i.e., a short-format PSP-ID list 2, may be transmitted within an (n+3)^{th} period, and so on, where n is a positive integer. For another example, the subset 1 of IDs may be transmitted within an even-numbered period, and the subset 2 of IDs may be transmitted within an odd-numbered period.

### Third Example

Step 34 may include: determining idle subframes that have not be occupied; determining idle subcarriers that have not been occupied within the idle subframes; and mapping each SIB carrying the corresponding subset of IDs to a corresponding idle subcarrier within each idle subframe by the correspondence of one SIB to one idle subcarrier, and transmitting each SIB to the UEs within the coverage range of the base station, different SIBs being transmitted through different idle subcarriers.

When the transmission on a plurality of carriers is supported by the same eNB within different idle subframes, i.e., different time points at which the SIB is transmitted, SIB (e.g., the eSIB) may be transmitted on the carriers acquired after the successful channel competition. The SIBs may carry different subsets of IDs, i.e., different short-format PSP-ID lists, and each short-format PSP-ID list at most includes M short-format PSP-IDs. If the eSIBs are transmitted by the eNB at a period of 40ms and the eNB has monitored L1 (L1≤N) idle carriers within an n^{th} period, the UE may receive L1 eSIBs broadcast by the eNB on the L1 idle carriers. When the eNB has monitored L2 (L2≤N) idle carriers within an (n+1)^{th} period, the UE may receive L2 eSIBs broadcast by the eNB on the L2 idle carriers, and so on. In this way, the short-format PSP-IDs received on the L1 and L2 subcarriers may be combined into a set of short-format PSP-IDs supported by the current access network (having an identical network ID, i.e., NHN-ID). L1, L2 and M are each an integer greater than or equal to 1.

The different SIBs may be transmitted to the UE through the idle subcarrier, the idle subframe, or the combination thereof, so as to transmit the subsets of IDs (i.e., the PSP-ID lists) to the UE as more as possible and reduce the query operations initiated by the UE, thereby to prevent the occurrence of unnecessary channel overhead.

In order to enable the UE to process the plurality of subsets of IDs in an accurate manner, each SIB from the base station may further carry the total number of SIBs transmitted from the base station. Further, each SIB may further include indication information about, in a time domain and/or a frequency domain, the number of the SIBs carrying different subsets of IDs (different PSP-ID lists) in the current access network. The UE may, in accordance with the indication information, use the PSP-ID lists in the SIBs acquired in the frequency domain and/or the time domain as the set of PSP-IDs supported by the current access network. When the number of the SIBs received by the UE is smaller than a predetermined threshold, it may be deemed that parts of the PSP-IDs have not been broadcast. When the number of the SIBs received by the UE is equal to the predetermined threshold and the indication information included in the SIB shows that there is no PSP-ID that has not been broadcast, it may be deemed that all the PSP-IDs supported by the current access network have been broadcast. If the SIBs (e.g., the eSIBs) are transmitted on the N carriers after the successful channel competition and the eNB has monitored L (L≤N) idle carriers, the UE may receive L SIBs broadcast by the eNB on the L idle carriers, and each SIB may carry the total number L of the SIBs. The above description is given by merely taking an FDD scenario as an example, and the transmission mode of the subsets of IDs may also be applicable to a TDD scenario or a combination of the FDD scenario and the TDD scenario.

The transmission mode of the subsets of IDs has been described hereinabove in different application scenarios such as the FDD scenario, the TDD scenario or a combination thereof. As a result, it is able to transmit the subsets of IDs to the UE as more as possible, so as to increase the number of the broadcast PSP-IDs and reduce the query operations initiated by the UE, thereby to prevent the occurrence of unnecessary channel overhead.

The methods for processing the identification information at a base station side have been described hereinabove, and the corresponding devices will be described hereinafter in conjunction with the drawings and embodiments.

As shown in Fig.4, the present disclosure provides in some embodiments a device 40 for processing identification information for use in a base station, which at least includes: an acquisition module 41 configured to acquire a set of all PSP-IDs supported by a current access network; a division module 42 configured to divide the set of PSP-IDs into a plurality of subsets of IDs; and a transmission module 43 configured to transmit at least one of the subsets of IDs to UEs within a coverage range of the base station.

In a possible embodiment of the present disclosure, the transmission module 43 may include a transmission sub-module configured to transmit the at least one of the subsets of IDs too the UEs within the coverage range of the base station through an idle channel resource.

In a possible embodiment of the present disclosure, the transmission sub-module includes: a mapping unit configured to map the at least one subset of IDs to a corresponding SIB by the correspondence of one subset of IDs to one SIB, different subsets of IDs being mapped to different SIBs; and a transmission unit configured to transmit each SIB carrying the corresponding subset of IDs to the UEs within the coverage range of the base station through the idle channel resource.

In a possible embodiment of the present disclosure, the transmission unit includes: a first determination sub-unit configured to determine idle subcarriers that have not been occupied; and a first transmission sub-unit configured to map SIB carrying the corresponding subset of IDs to a corresponding idle subcarrier by the correspondence of one SIB to one idle subcarrier, and transmit each SIB to the UEs within the coverage range of the base station, different SIBs being transmitted through different idle subcarriers.

In a possible embodiment of the present disclosure, the transmission unit includes: a second determination sub-unit configured to determine idle subframes that have not been occupied; and a second transmission sub-unit configured to map SIB carrying the corresponding subset of IDs to a corresponding idle subframe by the correspondence of one SIB to one idle subcarrier, and transmitting each SIB to the UEs within the coverage range of the base station, different SIBs being transmitted within different idle subframes.

In a possible embodiment of the present disclosure, each SIB further carries the total number of SIBs.

The device in the embodiments of the present disclosure corresponds to the method mentioned above, and the implementations of the device may refer to those of the method with an identical technical effect.

Corresponding to the above-mentioned method for processing the identification information at the base station side, the present disclosure further provides in some embodiments a base station. As shown in Fig.5, the base station includes: a processor 51 configured to read data or instructions stored in a memory, so as to acquire a set of all PSP-IDs supported by a current access network and divide the set of PSP-IDs into a plurality of subsets of IDs; and a transmitter 52 connected to the processor and configured to transmit at least one of the subsets of IDs to UEs within a coverage range of the base station.

The processor may be further configured to achieve the functions of the all the modules mentioned above with a same technical effect with the above device, which will not be particularly defined herein.

The method and the device for processing the identification information at the base station side as well as the base station have been described hereinabove. A method for processing identification information at a UE side will be described hereinafter.

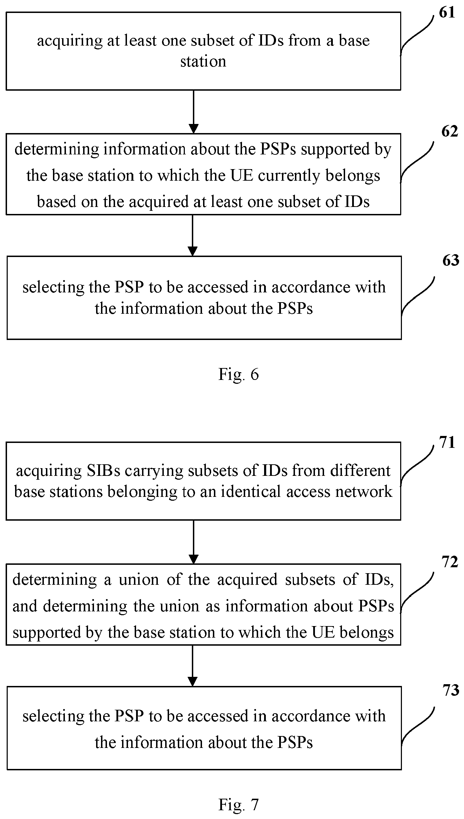

As shown in Fig.6, the present disclosure further provides in some embodiments a method for processing identification information which includes the following steps.

Step 61: acquiring at least one subset of IDs from a base station.

Each subset of IDs is a subset of a set of all PSP-IDs supported by a current access network, and it may also be called as a PSP-ID list. Each subset of IDs may include a plurality of PSP-IDs. Further, the current access network may be an NHN access network, and a PSP may refer to a service provider, e.g., an operator or any other type of service provider. Different PSPs may have different PSP-IDs, i.e., different identification information. All the PSP-IDs supported by the NHN access network to which a base station is currently accessed form the set of PSP-IDs.

Step 62: determining information about the PSPs supported by the base station to which the UE currently belongs in accordance with the acquired at least one subset of IDs.

In a possible embodiment of the present disclosure, a union of the acquired subsets of IDs may be determined as the information about the PSPs supported by the base station to which the UE currently belongs.

To be specific, the union of the acquired subsets of IDs may be determined in accordance with a predetermined algorithm, so as to acquire a set including more PSP-IDs. This set may be determined as the information about the PSPs supported by the base station to which the UE currently belongs. The algorithm will not be particularly defined herein.

Step 63: selecting the PSP to be accessed in accordance with the information about the PSPs.

The UE may select the PSP in accordance with the PSP-ID in the subsets of IDs in an identical network. Particularly, when two or more subsets of IDs have been received by the UE, the union of the subsets of IDs may be determined, so as to acquire a set containing more PSP-IDs. In this way, it is able to reduce the query operations initiated by the UE, thereby to prevent the occurrence of unnecessary resource overhead.

As shown in Fig.7, the present disclosure further provides in some embodiments a method for processing identification information which includes the following steps.

Step 71: acquiring SIBs carrying subsets of IDs from different base stations belonging to a same access network.

Different subsets of IDs may be mapped to different SIBs. In other words, when one subset of IDs needs to be broadcast, it may be mapped to one SIB. When two subsets of IDs need to be broadcast, they may be mapped to different SIBs respectively. In this way, the plurality of subsets of IDs may be carried in the plurality of SIBs. It should be appreciated that, different SIBs carrying different subsets of IDs may carry the other system information same as or different from each other.

Further, different eNBs belonging to an identical access network may transmit the SIBs at different time points (e.g., they may have different DTxWs or transmit the SIBs asynchronously). The UEs at an edge of a cell may receive the SIBs broadcast by the adjacent eNBs, i.e., receive the subsets of IDs (the short-format PSP-ID lists) through the SIBs broadcast by different eNBs.

Step 72: determining a union of the acquired subsets of IDs, and determining the union as information about PSPs supported by the base station to which the UE belongs.

The union of the subsets of IDs from different eNBs may be determined in accordance with a predetermined algorithm, so as to acquire a set containing more PSP-IDs. This set may be determined as the information about the PSPs supported by the base station to which the UE belongs. The algorithm used to determine the union of the subsets of IDs is not limited.

Step 73: selecting the PSP to be accessed in accordance with the information about the PSPs.

The UE may select the PSP in accordance with the PSP-ID in the subsets of IDs in a same network. Particularly, when two or more subsets of IDs have been received by the UE, the union of the subsets of IDs may be determined, so as to acquire a set containing more PSP-IDs. In this way, it is able to reduce the query operations initiated by the UE, thereby to prevent the occurrence of unnecessary channel resource overhead.

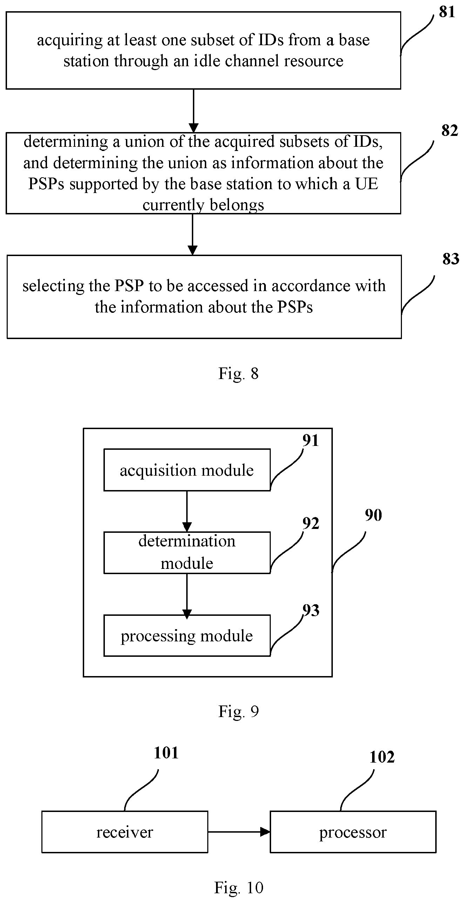

As shown in Fig.8, the present disclosure further provides in some embodiments a method for processing identification information which includes the following steps.

Step 81: acquiring at least one subset of IDs from a base station through an idle channel resource.

Here, the so-called idle channel resource at least includes an idle time-domain resource, an idle frequency-domain resource or any other idle channel resource. The current subset of IDs may be broadcast by the base station in accordance with the current idle time-domain resource or the current idle frequency-domain resource, i.e., the subset of IDs received by the UE may be broadcast in a TDD or FDD manner.

For example, the UE may receive the SIBs carrying the subsets of IDs from the base station to which the UE currently belongs through different idle subcarriers. Different subsets of IDs are mapped to different SIBs, and different SIBs are transmitted through different idle subcarriers. For example, the UE may receive the SIBs broadcast by the eNB on L (L≤N) carriers.

For another example, the UE may receive the SIBs carrying the subsets of IDs from the base station to which the UE currently belongs within different idle subframes. Different subsets of IDs are mapped to different SIBs, and different SIBs are transmitted within different idle subframes. The UE may acquire the set of PSP-IDs supported by the current access network in accordance with the PSP-ID lists received at different time.

Step 82: determining a union of the acquired subsets of IDs, and determining the union as information about the PSPs supported by the base station to which the UE currently belongs.

The union of subsets of IDs transmitted by an identical eNB through the idle subcarriers or idle subframes may be determined in accordance with a predetermined algorithm, so as to acquire a set containing more PSP-IDs. This set may be determined as the information about the PSPs supported by the base station to which the UE currently belongs. For example, the UE may acquire the set of short-format PSP-IDs supported by the current access network (having a same network ID, e.g., NHN-ID) in accordance with the short-format PSP-IDs received on the L carriers, the PSP-ID lists received through the plurality of SIBs in the adjacent time domains, or the PSP-ID lists received through the L carriers and in the adjacent time domains. It should be appreciated that, the algorithm will not be particularly defined herein, and any algorithm capable of acquiring the union of the subsets of IDs may be applicable.

Step 83: selecting the PSP to be accessed in accordance with the information about the PSPs.

Step 83 may be implemented in various modes.

Mode 1: Step 83 may include: determining whether or not there is the PSP to which the UE is to be accessed in accordance with the information about the PSPs; when there is the PSP to which the UE is to be accessed, selecting a corresponding PSP so as to access to the PSP; and when there is no PSP to which the UE is to be accessed and the SIBs indicate that there is the identification information that has not been broadcast, requesting the base station to which the UE currently belongs to inquire a corresponding PSP, so as to access to the corresponding PSP.

In other words, after the UE has determined the information about the current PSPs in accordance with the received subsets of IDs, it may generate the short-format PSP-IDs in accordance with the PSP-IDs supported by itself (e.g., through a Hash algorithm), and then determine whether or not there is the supported short-format PSP-ID from the set of short-format PSP-IDs supported by the current access network, i.e., determine whether or not there is the corresponding PSP-ID in the information about the PSPs. When there is the corresponding PSP-ID in the information about the PSPs, the UE may directly request to access to the PSP. When there is no corresponding PSP-ID in the information about the PSPs, the UE may continue to determine whether or not there are PSP-IDs that have not been broadcast in accordance with the SIB. When there are the PSP-IDs that have not been broadcast, the UE may inquire the base station for the PSP-IDs that have not been broadcast. At this time, the base station may notify, in accordance with a query request, the PSP-IDs that have not been broadcast to the UE in a unicast manner, so that the UE may access to the PSP.

Mode 2: Step 83 may include: determining whether or not there is the PSP to which the UE is to be accessed in accordance with the information about the PSPs; when there is the PSP to which the UE is to be accessed, selecting a corresponding PSP so as to access to the PSP; and when there is no PSP to which the UE is to be accessed and the number of the received SIBs is smaller than the total number of SIBs, requesting the base station to which the UE currently belongs to inquire a corresponding PSP, so as to access to the corresponding PSP.

In other words, after the UE has determined the information about the current PSPs in accordance with the received subsets of IDs, it may generate the short-format PSP-IDs in accordance with the PSP-IDs supported by itself (e.g., through a Hash algorithm), and then determine whether or not there is the supported short-format PSP-ID from the set of short-format PSP-IDs supported by the current access network, i.e., determine whether or not there is the corresponding PSP-ID in the information about the PSPs. When there is the corresponding PSP-ID in the information about the PSPs, the UE may directly request to access to the PSP. When there is no corresponding PSP-ID in the information about the PSPs, the UE may continue to detect whether or not the number of the currently-received SIBs is smaller than the total number of SIBs. When the number of the received SIBs is smaller than the total number of SIBs, it means that the currently-received PSP IDs are merely parts of all the PSP-IDs, i.e., there are the PSP-IDs that have not been broadcast. At this time, the UE may inquire the base station for the PSP-IDs that have not been broadcast, and the base station may notify, in accordance with a query request, the PSP-IDs that have not been broadcast to the UE in a unicast manner, so that the UE may access to the PSP.

It should be appreciated that, the above Modes 1 and 2 may be used individually to an access network system, or used in combination to an identical access network system. In a possible embodiment, when broadcasting the subsets of IDs, the base station may adjust the PSP-IDs in a current subset of IDs and a broadcasting mode in future in accordance with a query request from one or more UEs for inquiring the PSP-IDs that have not been broadcast within a previous predetermined time period. To be specific, if the identification information about a PSP 1 has not been broadcast within the previous predetermined period, and the plurality of UEs has inquired the base station for the PSP-ID, the identification information about the PSP 1 may be given with a high query priority level, and the base station may broadcast the identification information about the PSP1 to the UE within a next period, so as to reduce the query operations initiated by the UE, thereby to reduce the resource overhead.

In the embodiments of the present disclosure, the UE may select the PSP in accordance with the PSP-ID in the subset of IDs transmitted by a same base station or different base stations through different subframes or subcarriers. Particularly, when two or more subsets of IDs have been received by the UE, the union of the subsets of IDs may be determined, so as to acquire a set containing more PSP-IDs. In this way, it is able to reduce the query operations initiated by the UE, thereby to prevent the occurrence of unnecessary resource overhead.

The method for processing the identification information at the UE side has been described hereinafter, and a corresponding device will be described hereinafter in conjunction with the drawings and embodiments.

As shown in Fig.9, the present disclosure provides in some embodiments a device 90 for processing identification information for use in a UE, which includes: an acquisition module 91 configured to acquire at least one subset of IDs transmitted by a base station through idle channel resource, each subset of IDs being a subset of a set of all PSP-IDs supported by a current access network; a determination module 92 configured to determine information about PSPs supported by the base station to which the UE currently belongs in accordance with the acquired at least one subset of IDs; and a processing module 93 configured to select the PSP to be accessed in accordance with the information about the PSPs.

In a possible embodiment of the present disclosure, a union of the acquired subsets of IDs may be determined as the information about the PSPs supported by the base station to which the UE currently belongs.

In a possible embodiment of the present disclosure, the acquisition module 91 includes a first acquisition sub-module configured to acquire SIBs carrying the subsets of IDs from different base stations belonging to a same access network, different subsets of IDs being mapped to different SIBs.

In a possible embodiment of the present disclosure, the acquisition module 91 further includes a second acquisition sub-module configured to acquire the at least one subset of IDs from the base station through an idle channel resource.

In a possible embodiment of the present disclosure, the second acquisition sub-module includes a first reception unit configured to receive the SIBs carrying the subsets of IDs from the base station to which the UE currently belongs through different idle subcarriers, different subsets of IDs being mapped to different SIBs, and different SIBs being transmitted through different idle subcarriers.

In a possible embodiment of the present disclosure, the second acquisition sub-module further includes a second reception unit configured to receive the SIBs carrying the subsets of IDs from the base station to which the UE currently belongs within different idle subframes, different subsets of IDs being mapped to different SIBs, and different SIBs being transmitted within different idle subcarriers.

In a possible embodiment of the present disclosure, the processing module 93 includes: a first search sub-module configured to determine whether or not there is the PSP to which the UE is to be accessed in accordance with the information about the PSPs; and a first access sub-module configured to, when there is no PSP to which the UE is to be accessed and the SIBs indicate that there is the identification information that has not been broadcast, request the base station to which the UE currently belongs to inquire the corresponding PSP, so as to access to the corresponding PSP.

In a possible embodiment of the present disclosure, the processing module 93 further includes: a second search sub-module configured to determine whether or not there is the PSP to which the UE is to be accessed in accordance with the information about the PSPs; and a second access sub-module configured to, when there is no PSP to which the UE is to be accessed and the number of the currently-acquired SIBs is smaller than the total number of the SIBs, request the base station to which the UE currently belongs to inquire the corresponding PSP, so as to access to the corresponding PSP.

The device in the embodiments of the present disclosure corresponds to the method mentioned above, and the implementations of the device may refer to those of the method with a same technical effect.

Corresponding to the above-mentioned method for processing the identification information at the UE side, the present disclosure further provides in some embodiments a UE. As shown in Fig.10, the UE includes: a receiver 101 configured to acquire at least one subset of IDs from a base station, each subset of IDs being a subset of a set of all PSP-IDs supported by a current access network; and a processor 102 connected to the receiver and configured to read data or instructions stored in the memory, so as to determine information about PSPs supported by the base station to which the UE currently belongs in accordance with the acquired at least one subset of IDs (e.g., determine a union of the acquired subsets of IDs as the information about the PSPs), and select the PSP to be accessed in accordance with the information about the PSPs.

The processor may be further configured to achieve the functions of the above-mentioned modules with a same technical effect as the above device, which will not be particularly defined herein.

The processor 602 may be an Integrated Circuit (IC) having a signal processing capability. During the implementation, the steps in the methods may be executed by an integrated logic circuit in the form of hardware or instructions in the form of software in the processor. The processor may be a general-purpose processor, including a Central Processing Unit (CPU), a Network Processor (NP), a Digital Signal Processor (DSP), an Application Specific Integrated Circuit (ASIC), a Field Programmable Gate Array (FPGA), or any other programmable logic element, discrete gate or transistor logic element, or discrete hardware assembly, so as to implement or execute the method, the steps and the procedures. The general-purpose processor may be a microprocessor or any other conventional processor.

It should be further appreciated that, according to the device and the method in the embodiments of the present disclosure, the members and/or steps may be subdivided and/or recombined, which shall also be deemed as equivalents of the present disclosure. In addition, the steps for executing the above-mentioned processings may be performed in a chronological order. Of course, some steps may also be performed in parallel, or independently of each other.

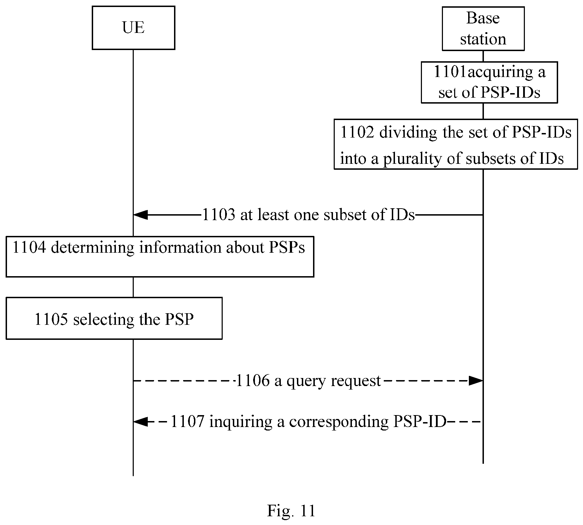

As shown in Fig. 11, the present disclosure further provides in some embodiments a method for processing identification information, which includes the following steps.

Step 1101: acquiring, by a base station, a set of all PSP-IDs supported by a current access network.

Step 1102: dividing, by the base station, the set of PSP-IDs into a plurality of subsets of IDs.

In a possible embodiment of the present disclosure, the number of the PSP-IDs in different subsets of IDs may be same as or different from each other. In addition, the PSP-IDs in different subsets of IDs may overlap or may not overlap each other. It should be appreciated that, the number of the subsets and the number of the elements (i.e., the PSP-IDs) in each subset will not be particularly defined herein.

Step 1103: transmitting, by the base station, at least one of the subsets of IDs to the UE.

In a possible embodiment of the present disclosure, the base station may transmit the at least one subset of IDs through an idle channel resource. To be specific, the base station may map the at least one subset of IDs to a corresponding SIB by the correspondence of one subset of IDs to one SIB, and transmit each SIB carrying the corresponding subset of IDs to the UE through the idle channel resource. The idle channel resource may be an idle subcarrier and/or an idle subframe.

Step 1104: determining, by the UE, information about PSPs supported by the base station to which the UE currently belongs in accordance with the at least one subset of IDs received in Step 1103.

In a possible embodiment of the present disclosure, a union of the acquired at least one subset of IDs may be determined as the information about the PSPs.

Step 1105: selecting, by the UE, the PSP to be accessed in accordance with the information about the PSPs.

When the UE fails to find the PSP to which the UE is to be accessed in the information about PSPs or the SIB from the base station indicates that there is the identification information that has not been broadcast, the UE may transmit a query request to the base station (Step 1106). Then, the base station may transmit the inquired PSP ID to the UE (Step 1107).

The implementation of the method in the embodiments of the present disclosure may refer that mentioned above, and thus will not be particularly defined herein.

The present disclosure further provides in some embodiments a system for processing identification information, which includes the above-mentioned base station and UE.

The above are merely the preferred embodiments of the present disclosure, but the present disclosure is not limited thereto. Obviously, a person skilled in the art may make further modifications and improvements.

## Claims

1. A method for processing identification information for use in a User Equipment, UE, comprising steps of:
acquiring (61) at least one subset of Identities, IDs, from a base station, the subset of IDs being a subset of a set of all Participating Service Provider Identities, PSP-IDs, divided by the base station, supported by a current access network;
determining (62) information about Participating Service Providers, PSPs, supported by the base station to which the UE currently belongs in accordance with the acquired at least one subset of IDs; and
selecting (63) a PSP to be accessed in accordance with the information about the PSPs;
**characterized in that,**
the step of acquiring (61) the at least one subset of IDs from the base station comprises: acquiring System Information Blocks, SIBs, carrying the subsets of IDs from different base stations belonging to a same access network, different subsets of IDs being mapped to different SIBs, and, acquiring the at least one subset of IDs transmitted by the base station through an idle channel resource.

2. The method according to claim 1, wherein the step of acquiring the at least one subset of IDs transmitted by the base station through the idle channel resource comprises receiving the SIBs carrying the subsets of IDs from the base station to which the UE currently belongs through different idle subcarriers, different subsets of IDs being mapped to different SIBs, and different SIBs being transmitted through different idle subcarriers.

3. The method according to claim 1 or 2, wherein the step of acquiring the at least one subset of IDs transmitted by the base station through the idle channel resource comprises receiving the SIBs carrying the subsets of IDs from the base station to which the UE currently belongs within different idle subframes, different subsets of IDs being mapped to different SIBs, and different SIBs being transmitted within different idle subcarriers.

4. The method according to any one of claims 1 to 3, wherein the step of selecting (63) the PSP to be accessed in accordance with the information about the PSPs comprises:
determining whether or not there is the PSP to which the UE is to be accessed in accordance with the information about the PSPs; and
if there is no PSP to which the UE is to be accessed and the SIBs indicate that there is the identification information that has not been broadcast, requesting the base station to which the UE currently belongs to inquire a corresponding PSP, so as to access to the corresponding PSP.

5. The method according to any one of claims 1 to 3, wherein the step of selecting (63) the PSP to be accessed in accordance with the information about the PSPs comprises:
determining whether or not there is the PSP to which the UE is to be accessed in accordance with the information about the PSPs; and
when there is no PSP to which the UE is to be accessed and a number of the currently-acquired SIBs is smaller than a total number of the SIBs, requesting the base station to which the UE currently belongs to inquire a corresponding PSP, so as to access to the corresponding PSP.

6. The method according to any one of claims 1 to 5, wherein the step of determining (62) the information about the PSPs supported by the base station to which the UE currently belongs in accordance with the acquired at least one subset of IDs comprises: determining a union of the acquired at least one subset of IDs as the information about the PSPs, and/or
wherein each subset of IDs comprises one or more PSP-IDs.

7. A method for processing identification information for use in a base station, comprising steps of:
acquiring (11) a set of all Participating Service Provider Identities, PSP-IDs, supported by a current access network;
dividing (12) the set of PSP-IDs into a plurality of subsets of IDs; and
transmitting (13) at least one of the plurality of subset of IDs to User Equipments, UEs, within a coverage range of the base station;
**characterized in that,**
the step of transmitting (13) the at least one of the plurality of subset of IDs to the UEs within the coverage range of the base station comprises transmitting the at least one of the plurality of subset of IDs to the UEs within the coverage range of the base station through an idle channel resource ;
the step of transmitting the at least one of the plurality of subset of IDs to the UEs within the coverage range of the base station through the idle channel resource comprises:
mapping the at least one of the plurality of subset of IDs to a corresponding System Information Block, SIB, by a correspondence of one subset of IDs to one SIB, different subsets of IDs being mapped to different SIBs; and
transmitting the SIB carrying the corresponding subset of IDs to the UEs within the coverage range of the base station through the idle channel resource.

8. The method according to claim 7, wherein the step of transmitting the SIB carrying the corresponding subset of IDs to the UEs within the coverage range of the base station through the idle channel resource comprises:
determining idle subcarriers that have not been occupied; and
mapping the SIB carrying a corresponding subset of IDs to a corresponding idle subcarrier by the correspondence of one SIB to one idle subcarrier, and transmitting the SIB to the UEs within the coverage range of the base station, different SIBs being transmitted through different idle subcarriers.

9. The method according to claim 7 or 8, wherein the step of transmitting the SIB carrying the corresponding subset of IDs to the UEs within the coverage range of the base station through the idle channel resource comprises:
determining idle subframes that have not been occupied; and
mapping the SIB carrying the corresponding subset of IDs to a corresponding idle subframe by a correspondence of one SIB to one idle subcarrier, and transmitting the SIB to the UEs within the coverage range of the base station, different SIBs being transmitted within different idle subframes, and/or
wherein the SIB further carries information about a total number of SIBs, and/or
further comprising broadcasting the identification information about the PSPs which have been inquired for a number of query times greater than a predetermined threshold to the UE.

10. A device for processing identification information for use in a User Equipment, UE, comprising:
an acquisition module (91) configured to acquire at least one subset of Identities, IDs, from a base station, the subset of IDs being a subset of a set of all Participating Service Provider Identities, PSP-IDs, divided by the base station, supported by a current access network;
a determination module (92) configured to determine information about PSPs supported by the base station to which the UE currently belongs in accordance with the acquired at least one subset of IDs; and
a processing module (93) configured to select a PSP to be accessed in accordance with the information about the PSPs;
**characterized in that,**
the acquisition module (91) comprises a first acquisition sub-module configured to acquire SIBs carrying the subsets of IDs from different base stations belonging to a same access network, different subsets of IDs being mapped to different SIBs, and, second acquisition sub-module configured to acquire the at least one subset of IDs from the base station through an idle channel resource.

11. A device for processing identification information for use in a base station, comprising:
an acquisition module (41) configured to acquire a set of all Participating Service Provider Identities, PSP-IDs, supported by a current access network;
a division module (42) configured to divide the set of IDs into a plurality of subsets of IDs; and
a transmission module (43) configured to transmit at least one of the plurality of subset of IDs to UEs within a coverage range of the base station;
**characterized in that,**
the transmission (43) module comprises a transmission sub-module configured to transmit the at least one of the subsets of IDs to the UEs within the coverage range of the base station through an idle channel resource;
the transmission sub-module comprises:
a mapping unit configured to map the at least one subset of IDs to a corresponding SIB by the correspondence of one subset of IDs to one SIB, different subsets of IDs being mapped to different SIBs; and
a transmission unit configured to transmit each SIB carrying the corresponding subset of IDs to the UEs within the coverage range of the base station through the idle channel resource.

## Patentansprüche

1. Verfahren zum Verarbeiten von Identifikationsinformationen zur Verwendung in einem Benutzergerät, UE, umfassend die folgenden Schritte:
Erfassen (61) mindestens eines Teilsatzes von Identitäten, IDs, von einer Basisstation, wobei der Teilsatz von IDs ein Teilsatz eines Satzes aller teilnehmenden Dienstanbieter-Identitäten, PSP-IDs, ist, der von der Basisstation geteilt wird und von einem aktuellen Zugangsnetz bereitgestellt wird;
Bestimmen (62) von Informationen über teilnehmende Dienstanbieter, PSPs, die von der Basisstation unterstützt werden, zu der das UE derzeit gehört, in Übereinstimmung mit dem erfassten mindestens einen Teilsatz von IDs; und
Auswählen (63) eines PSP, auf den zugegriffen werden soll, in Übereinstimmung mit den Informationen über die PSPs;
**dadurch gekennzeichnet, dass**
der Schritt des Erfassens (61) des mindestens einen Teilsatzes von IDs von der Basisstation umfasst:
Erfassen von Systeminformationsblöcken, SIBs, die die Teilsätze von IDs von verschiedenen Basisstationen tragen, die zu einem gleichen Zugangsnetz gehören, wobei verschiedene Teilsätze von IDs verschiedenen SIBs zugeordnet sind, und
Erfassen des mindestens einen Teilsatzes von IDs, der von der Basisstation über eine freie Kanalressource übertragen wird.

2. Verfahren nach Anspruch 1, wobei der Schritt des Erfassens des mindestens einen Teilsatzes von IDs, der von der Basisstation über die freie Kanalressource übertragen wird, das Empfangen der SIBs umfasst, die die Teilsätze von IDs von der Basisstation tragen, zu der das UE gegenwärtig gehört, und zwar über verschiedene freie Unterträger, wobei verschiedene Teilsätze von IDs verschiedenen SIBs zugeordnet sind, und verschiedene SIBs über verschiedene freie Unterträger übertragen werden.

3. Verfahren nach Anspruch 1 oder 2, wobei der Schritt des Erfassens des mindestens einen Teilsatzes von IDs, der von der Basisstation über die freie Kanalressource übertragen wird, ein Empfangen der SIBs umfasst, die die Teilsätze von IDs von der Basisstation tragen, zu der das UE gegenwärtig innerhalb verschiedener freier Unterrahmen gehört, wobei verschiedene Teilsätze von IDs verschiedenen SIBs zugeordnet sind, und verschiedene SIBs innerhalb verschiedener freier Unterträger übertragen werden.

4. Verfahren nach einem der Ansprüche 1 bis 3, wobei der Schritt des Auswählens (63) des PSP, auf das zugegriffen werden soll, in Übereinstimmung mit den Informationen über die PSPs umfasst:
Bestimmen, ob es den PSP gibt, auf den das UE gemäß den Informationen über die PSPs zugreifen soll oder nicht; und
wenn es keinen PSP gibt, auf den das UE zugreifen soll, und die SIBs anzeigen, dass es die Identifikationsinformation gibt, die nicht gesendet wurde, Auffordern der Basisstation, zu der das UE gegenwärtig gehört, einen entsprechenden PSP anzufragen, um auf den entsprechenden PSP zuzugreifen.

5. Verfahren nach einem der Ansprüche 1 bis 3, wobei der Schritt des Auswählens (63) des PSP, auf den zugegriffen werden soll, in Übereinstimmung mit den Informationen über die PSPs umfasst:
Bestimmen, ob es den PSP gibt, auf den das UE gemäß den Informationen über die PSPs zugreifen soll; und
wenn es keinen PSP gibt, auf den das UE zugreifen soll, und eine Anzahl der aktuell erfassten SIBs kleiner als eine Gesamtzahl der SIBs ist, Auffordern der Basisstation, zu der das UE aktuell gehört, einen entsprechenden PSP anzufragen, um auf den entsprechenden PSP zuzugreifen.

6. Verfahren nach einem der Ansprüche 1 bis 5, wobei der Schritt des Bestimmens (62) der Informationen über die von der Basisstation unterstützten PSPs, zu denen das UE aktuell gehört, in Übereinstimmung mit dem erfassten mindestens einen Teilsatz von IDs umfasst: Bestimmen einer Vereinigung dem erfassten mindestens einen Teilsatz von IDs als die Informationen über die PSPs, und/oder
wobei jeder Teilsatz von IDs eine oder mehrere PSP-IDs umfasst.

7. Verfahren zum Verarbeiten von Identifikationsinformationen zur Verwendung in einer Basisstation, das die folgenden Schritte umfasst:
Erfassen (11) eines Satzes aller teilnehmenden Dienstanbieteridentitäten, PSP-IDs, die von einem aktuellen Zugangsnetz unterstützt werden;
Teilen (12) des Satzes von PSP-IDs in eine Vielzahl von Teilsätzen von IDs; und Übertragen (13) mindestens einer aus der Vielzahl von Teilsätzen von IDs an Benutzergeräte, UEs, innerhalb eines Versorgungsbereichs der Basisstation;
**dadurch gekennzeichnet, dass**
der Schritt des Übertragens (13) des mindestens einen der Vielzahl von Teilsätzen von IDs an die UEs innerhalb des Abdeckungsbereichs der Basisstation ein Übertragen des mindestens einen der Vielzahl von Teilsätzen von IDs an die UEs innerhalb des Abdeckungsbereichs der Basisstation über eine freie Kanalressource umfasst;
der Schritt des Übertragens des mindestens einen der Vielzahl von Teilsätzen von IDs zu den UEs innerhalb des Abdeckungsbereichs der Basisstation über die freie Kanalressource umfasst:
Zuordnen des mindestens einen der Vielzahl von Teilsätzen von IDs zu einem entsprechenden Systeminformationsblock, SIB, durch eine Entsprechung eines Teilsatzes von IDs zu einem SIB, wobei verschiedene Teilsätze von IDs zu verschiedenen SIBs zugeordnet werden; und
Übertragen des SIB, der den entsprechenden Teilsatz von IDs trägt, zu den UEs innerhalb des Abdeckungsbereichs der Basisstation über die freie Kanalressource.

8. Verfahren nach Anspruch 7, wobei der Schritt des Übertragens des SIB, der den entsprechenden Teilsatz von IDs trägt, an die UEs innerhalb des Versorgungsbereichs der Basisstation über die freie Kanalressource umfasst:
Bestimmen von freien Unterträgern, die nicht belegt sind; und
Zuordnen des SIB, der einen entsprechenden Teilsatz von IDs trägt, zu einem entsprechenden freien Unterträger durch die Entsprechung eines SIB zu einem freien Unterträger, und Übertragen des SIB zu den UEs innerhalb des Abdeckungsbereichs der Basisstation, wobei unterschiedliche SIBs über unterschiedliche freie Unterträger übertragen werden.

9. Verfahren nach Anspruch 7 oder 8, wobei der Schritt des Übertragens des SIB, der den entsprechenden Teilsatz von IDs trägt, an die UEs innerhalb des Versorgungsbereichs der Basisstation über die freie Kanalressource umfasst:
Bestimmen von freien Unterrahmen, die nicht belegt worden sind; und
Zuordnen des SIB, der den entsprechenden Teilsatz von IDs trägt, zu einem entsprechenden freien Unterrahmen durch eine Entsprechung von einem SIB zu einem freien Unterträger, und Übertragen des SIB zu den UEs innerhalb des Abdeckungsbereichs der Basisstation, wobei unterschiedliche SIBs innerhalb unterschiedlicher freier Unterrahmen übertragen werden, und/oder
wobei der SIB weiter Informationen über eine Gesamtzahl von SIBs trägt, und/oder
weiter umfassend das Übertragen der Identifikationsinformation über die PSPs, die eine Anzahl von Anfragen, die größer als ein vorbestimmter Schwellenwert ist, an das UE angefragt wurden.

10. Gerät zum Verarbeiten von Identifikationsinformationen zur Verwendung in einem Benutzergerät, UE, umfassend:
ein Erfassungsmodul (91), das konfiguriert ist, um mindestens einen Teilsatz von Identitäten, IDs, von einer Basisstation zu erfassen, wobei der Teilsatz von IDs ein Teilsatz eines Satzes aller teilnehmenden Dienstanbieter-Identitäten, PSP-IDs, ist, der von der Basisstation geteilt wird und von einem aktuellen Zugangsnetz bereitgestellt wird;
ein Bestimmungsmodul (92), das konfiguriert ist, um Informationen über PSPs zu bestimmen, die von der Basisstation unterstützt werden, zu der das UE derzeit gehört, in Übereinstimmung mit dem erfassten mindestens einen Teilsatz von IDs; und
ein Verarbeitungsmodul (93), das konfiguriert ist, um einen PSP, auf den zugegriffen werden soll, in Übereinstimmung mit den Informationen über die PSPs auszuwählen;
**dadurch gekennzeichnet, dass**
das Erfassungsmodul (91) ein erstes Erfassungsuntermodul umfasst, das konfiguriert ist, um SIBs zu erfassen, die die Teilsätze von IDs von verschiedenen Basisstationen tragen, die zu einem gleichen Zugangsnetz gehören, wobei verschiedene Teilsätze von IDs verschiedenen SIBs zugeordnet werden, und,
ein zweites Erfassungsuntermodul, das konfiguriert ist, um den mindestens einen Teilsatz von IDs von der Basisstation über eine freie Kanalressource zu erfassen.

11. Gerät zum Verarbeiten von Identifikationsinformationen zur Verwendung in einer Basisstation, umfassend:
ein Erfassungsmodul (41), das konfiguriert ist, um einen Satz aller teilnehmenden Dienstanbieter-Identitäten, PSP-IDs, die von einem aktuellen Zugangsnetz unterstützt werden, zu erfassen;
ein Teilungsmodul (42), das konfiguriert ist, um den Satz von IDs in eine Vielzahl von Teilsätzen von IDs zu teilen; und
ein Übertragungsmodul (43), das konfiguriert ist, mindestens eine der Vielzahl von Teilsätzen von IDs an UEs innerhalb eines Abdeckungsbereichs der Basisstation zu übertragen;
**dadurch gekennzeichnet, dass**
das Übertragungsmodul (43) ein Übertragungsuntermodul umfasst, das konfiguriert ist, um mindestens einen der Teilsätze von IDs zu den UEs innerhalb des Abdeckungsbereichs der Basisstation über eine freie Kanalressource zu übertragen;
das Übertragungsuntermodul umfasst:
eine Zuordnungseinheit, die konfiguriert ist, um den mindestens einen Teilsatz von IDs einem entsprechenden SIB durch die Entsprechung eines Teilsatzes von IDs zu einem SIB zuzuordnen, wobei unterschiedliche Teilsätze von IDs unterschiedlichen SIBs zugeordnet werden; und
eine Übertragungseinheit, die konfiguriert ist, um jeden SIB, der den entsprechenden Teilsatz von IDs trägt, zu den UEs innerhalb des Abdeckungsbereichs der Basisstation über die freie Kanalressource zu übertragen.

## Revendications

1. Procédé de traitement d'informations d'identification destinées à être utilisées dans un équipement d'utilisateur, UE, le procédé comprenant les étapes ci-dessous consistant à :
acquérir (61) au moins un sous-ensemble d'identités, ID, à partir d'une station de base, le sous-ensemble d'identités étant un sous-ensemble d'un ensemble de toutes les identités de fournisseurs de services participants, PSP-ID, divisé par la station de base, pris en charge par un réseau d'accès en cours ;
déterminer (62) des informations concernant des fournisseurs de services participants, PSP, pris en charge par la station de base à laquelle l'équipement UE appartient actuellement, conformément audit au moins un sous-ensemble d'identités acquis ; et
sélectionner (63) un fournisseur PSP auquel il convient d'accéder, conformément aux informations concernant les fournisseurs PSP ;
**caractérisé en ce que :**
l'étape d'acquisition (61) dudit au moins un sous-ensemble d'identités à partir de la station de base comprend les étapes consistant à : acquérir des blocs d'informations système, SIB, portant les sous-ensembles d'identités provenant de différentes stations de base appartenant à un même réseau d'accès, différents sous-ensembles d'identités étant mis en correspondance avec différents blocs SIB, et acquérir ledit au moins un sous-ensemble d'identités transmis par la station de base à travers une ressource de canal au repos.

2. Procédé selon la revendication 1, dans lequel l'étape d'acquisition dudit au moins un sous-ensemble d'identités transmis par la station de base à travers la ressource de canal au repos comprend l'étape consistant à recevoir les blocs SIB portant les sous-ensembles d'identités en provenance de la station de base à laquelle l'équipement UE appartient actuellement, à travers différentes sous-porteuses au repos, différents sous-ensembles d'identités étant mis en correspondance avec différents blocs SIB, et différents blocs SIB étant transmis à travers différentes sous-porteuses au repos.

3. Procédé selon la revendication 1 ou 2, dans lequel l'étape d'acquisition dudit au moins un sous-ensemble d'identités transmis par la station de base à travers la ressource de canal au repos comprend l'étape consistant à recevoir les blocs SIB portant les sous-ensembles d'identités en provenance de la station de base à laquelle l'équipement UE appartient actuellement, dans différentes sous-trames au repos, différents sous-ensembles d'identités étant mis en correspondance avec différents blocs SIB, et différents blocs SIB étant transmis dans différentes sous-porteuses au repos.

4. Procédé selon l'une quelconque des revendications 1 à 3, dans lequel l'étape de sélection (63) du fournisseur PSP auquel il convient d'accéder conformément aux informations concernant les fournisseurs PSP comprend les étapes ci-dessous consistant à :
déterminer s'il existe ou non le fournisseur PSP pour lequel l'équipement UE doit être accessible conformément aux informations concernant les fournisseurs PSP ; et
s'il n'existe pas de fournisseur PSP pour lequel l'équipement UE doit être accessible et si les blocs SIB indiquent qu'il existe des informations d'identification qui n'ont pas été diffusées, demander à la station de base à laquelle l'équipement UE appartient actuellement d'interroger un fournisseur PSP correspondant, afin d'accéder audit fournisseur PSP correspondant.

5. Procédé selon l'une quelconque des revendications 1 à 3, dans lequel l'étape de sélection (63) du fournisseur PSP auquel il convient d'accéder conformément aux informations concernant les fournisseurs PSP comprend les étapes ci-dessous consistant à :
déterminer s'il existe ou non le fournisseur PSP pour lequel l'équipement UE doit être accessible conformément aux informations concernant les fournisseurs PSP ; et
lorsqu'il n'existe pas de fournisseur PSP pour lequel l'équipement UE doit être accessible, et qu'un nombre des blocs SIB actuellement acquis est inférieur à un nombre total des blocs SIB, demander à la station de base à laquelle l'équipement UE appartient actuellement d'interroger un fournisseur PSP correspondant, afin d'accéder au fournisseur PSP correspondant.

6. Procédé selon l'une quelconque des revendications 1 à 5, dans lequel l'étape de détermination (62) des informations concernant les fournisseurs PSP pris en charge par la station de base à laquelle l'équipement UE appartient actuellement, conformément audit au moins un sous-ensemble d'identités acquis, comprend l'étape consistant à : déterminer une union dudit au moins un sous-ensemble d'identités acquis, en tant que les informations concernant les fournisseurs PSP ; et/ou
dans lequel chaque sous-ensemble d'identités comprend une ou plusieurs identités de fournisseurs de services participants, PSP-ID.

7. Procédé de traitement d'informations d'identification destinées à être utilisées dans une station de base, le procédé comprenant les étapes ci-dessous consistant à :
acquérir (11) un ensemble de toutes les identités de fournisseurs de services participants, PSP-ID, pris en charge par un réseau d'accès en cours ;
diviser (12) l'ensemble d'identités PSP-ID en une pluralité de sous-ensembles d'identités ; et
transmettre (13) au moins un sous-ensemble de la pluralité de sous-ensembles d'identités à des équipements d'utilisateur, UE, dans une plage de couverture de la station de base ;
**caractérisé en ce que :**
l'étape de transmission (13) dudit au moins un sous-ensemble de la pluralité de sous-ensembles d'identités aux équipements UE dans la plage de couverture de la station de base consiste à transmettre ledit au moins un sous-ensemble de la pluralité de sous-ensembles d'identités aux équipements UE dans la plage de couverture de la station de base, à travers une ressource de canal au repos ;
l'étape de transmission dudit au moins un sous-ensemble de la pluralité de sous-ensembles d'identités aux équipements UE dans la plage de couverture de la station de base, à travers la ressource de canal au repos, comprend les étapes ci-dessous consistant à :
mettre en correspondance ledit au moins un sous-ensemble de la pluralité de sous-ensembles d'identités avec un bloc d'informations système, SIB, correspondant, par le biais d'une correspondance d'un sous-ensemble d'identités avec un bloc SIB, différents sous-ensembles d'identités étant mis en correspondance avec différents blocs SIB ; et
transmettre le bloc SIB portant le sous-ensemble correspondant d'identités aux équipements UE dans la plage de couverture de la station de base, à travers la ressource de canal au repos.

8. Procédé selon la revendication 7, dans lequel l'étape de transmission du bloc SIB portant le sous-ensemble correspondant d'identités aux équipements UE dans la plage de couverture de la station de base, à travers la ressource de canal au repos, comprend les étapes ci-dessous consistant à :
déterminer des sous-porteuses au repos qui n'ont pas été occupées ; et
mettre en correspondance le bloc SIB portant un sous-ensemble correspondant d'identités avec une sous-porteuse au repos correspondante par le biais de la correspondance d'un bloc SIB avec une sous-porteuse au repos, et transmettre le bloc SIB aux équipements UE dans la plage de couverture de la station de base, différents blocs SIB étant transmis à travers différentes sous-porteuses au repos.

9. Procédé selon la revendication 7 ou 8, dans lequel l'étape de transmission du bloc SIB portant le sous-ensemble correspondant d'identités aux équipements UE dans la plage de couverture de la station de base à travers la ressource de canal au repos comprend les étapes ci-dessous consistant à :
déterminer des sous-trames au repos qui n'ont pas été occupées ; et
mettre en correspondance le bloc SIB portant le sous-ensemble correspondant d'identités avec une sous-trame au repos correspondante par le biais d'une correspondance d'un bloc SIB avec une sous-porteuse au repos, et transmettre le bloc SIB aux équipements UE dans la plage de couverture de la station de base, différents blocs SIB étant transmis dans différentes sous-trames au repos ; et/ou
dans lequel le bloc SIB porte en outre des informations concernant un nombre total de blocs SIB ; et/ou
comprenant en outre l'étape consistant à diffuser des informations d'identification concernant les fournisseurs PSP qui ont été interrogés, pendant un nombre d'occurrences d'interrogation supérieur à un seuil prédéterminé, à l'équipement UE.

10. Dispositif de traitement d'informations d'identification destinées à être utilisées dans un équipement d'utilisateur, UE, comprenant :
un module d'acquisition (91) configuré de manière à acquérir au moins un sous-ensemble d'identités, ID, à partir d'une station de base, le sous-ensemble d'identités étant un sous-ensemble d'un ensemble de toutes les identités de fournisseurs de services participants, PSP-ID, divisé par la station de base, pris en charge par un réseau d'accès en cours ;
un module de détermination (92) configuré de manière à déterminer des informations concernant des fournisseurs PSP pris en charge par la station de base à laquelle l'équipement UE appartient actuellement, conformément audit au moins un sous-ensemble d'identités acquis ; et
un module de traitement (93) configuré de manière à sélectionner un fournisseur PSP auquel il convient d'accéder, conformément aux informations concernant les fournisseurs PSP;
**caractérisé en ce que :**
le module d'acquisition (91) comprend un premier sous-module d'acquisition configuré de manière à acquérir des blocs SIB portant les sous-ensembles d'identités, à partir de différentes stations de base appartenant à un même réseau d'accès, différents sous-ensembles d'identités étant mis en correspondance avec différents blocs SIB, et, un second sous-module d'acquisition configuré de manière à acquérir ledit au moins un sous-ensemble d'identités, à partir de la station de base, à travers une ressource de canal au repos.

11. Dispositif de traitement d'informations d'identification destinées à être utilisées dans une station de base, comprenant :
un module d'acquisition (41) configuré de manière à acquérir un ensemble de toutes les identités de fournisseurs de services participants, PSP-ID, pris en charge par un réseau d'accès en cours ;
un module de division (42) configuré de manière à diviser l'ensemble d'identités en une pluralité de sous-ensembles d'identités ; et
un module de transmission (43) configuré de manière à transmettre au moins un sous-ensemble de la pluralité de sous-ensembles d'identités aux équipements UE dans une plage de couverture de la station de base ;
**caractérisé en ce que :**
le module de transmission (43) comprend un sous-module de transmission configuré de manière à transmettre ledit au moins un sous-ensemble des sous-ensembles d'identités aux équipements U E dans la plage de couverture de la station de base à travers une ressource de canal au repos ;
le sous-module de transmission comprend :
une unité de mise en correspondance configurée de manière à mettre en correspondance ledit au moins un sous-ensemble d'identités avec un bloc SIB correspondant, par le biais de la correspondance d'un sous-ensemble d'identités avec un bloc SIB, différents sous-ensembles d'identités étant mis en correspondance avec différents blocs SIB ; et
une unité de transmission configurée de manière à transmettre chaque bloc SIB portant le sous-ensemble correspondant d'identités, aux équipements UE, dans la plage de couverture de la station de base, à travers la ressource de canal au repos.
